(19) **Europäisches Patentamt / European Patent Office / Office européen des brevets**

(11) **EP 1 651 527 B1**

(12) **EUROPEAN PATENT SPECIFICATION**

(45) Date of publication and mention
of the grant of the patent:
**16.03.2016 Bulletin 2016/11**

(51) Int Cl.:
*B29K 67/00* (2006.01)   *B65D 1/02* (2006.01)
*B65D 81/26* (2006.01)   *B32B 1/02* (2006.01)
*B32B 27/34* (2006.01)   *B32B 27/36* (2006.01)
*B29C 49/08* (2006.01)   *B29C 49/22* (2006.01)
*C08L 67/02* (2006.01)   *C08K 5/098* (2006.01)
*C08J 5/18* (2006.01)

(21) Application number: **04763448.0**

(22) Date of filing: **23.07.2004**

(86) International application number:
**PCT/EP2004/008275**

(87) International publication number:
**WO 2005/014410 (17.02.2005 Gazette 2005/07)**

(54) **COMPOSITION FOR MAKING A PACKAGING ARTICLE HAVING OXYGEN-SCAVENGING PROPERTIES AND LOW HAZE**

ZUSAMMENSETZUNG ZUR HERSTELLUNG EINES VERPACKUNGSARTIKELS MIT SAUERSTOFFENTFERNUNGSEIGENSCHAFTEN UND GERINGER TRÜBUNG

COMPOSITION SERVANT A PRODUIRE UN ARTICLE D'EMBALLAGE AYANT DES PROPRIETES DESOXYGENANTES ET UN FAIBLE TROUBLE

(84) Designated Contracting States:
**AT BE BG CH CY CZ DE DK EE ES FI FR GB GR HU IE IT LI LU MC NL PL PT RO SE SI SK TR**

(30) Priority: **05.08.2003 EP 03017845**

(43) Date of publication of application:
**03.05.2006 Bulletin 2006/18**

(73) Proprietor: **Amcor Limited
Hawthorn, VIC 3122 (AU)**

(72) Inventor: **DEGROOTE, Laurent
F-59190 Caestre (FR)**

(74) Representative: **Matkowska, Franck et al
Matkowska & Associés
9, rue Jacques Prévert
59650 Villeneuve d'Ascq (FR)**

(56) References cited:
**EP-A- 0 301 719      EP-A- 0 380 319
EP-B- 0 527 903      WO-A-03/029349
US-A- 4 837 115      US-A- 5 068 136
US-A- 5 239 016      US-A- 5 258 233
US-A- 5 314 987      US-A- 5 340 884
US-B1- 6 444 283**

## Description

### Field of the invention

The present invention relates to packaging, especially packaging of oxygen-sensitive products, and more especially of food and beverages. A main object of the invention is a new polymeric composition for making a packaging article exhibiting both oxygen-scavenging properties and low haze.

### Prior art

Thermoplastic polymeric compositions are widely used in the packaging industry for making various packaging articles for storing oxygen-sensitive products, such as food or beverages.

The word "packaging article" used therein refers to any article that is used for storing any material, and especially (but not only) food or beverages. For examples, a package article can be a hollow and rigid container, such as bottle, jar or the like, a flexible plastic container, a film or a sheet for a package.

More especially, a thermoplastic composition that is widely used is polyethylene terephthalate (PET). This material has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, etc... PET is also permeable to carbon dioxide, which in turn leads to a short shelf life for carbonated products, such as carbonated soft drinks, stored in PET containers.

In order to improve the gas barrier properties of packaging articles, in particular oxygen and/or carbon dioxide barrier properties, it is now common to use multilayered packaging articles, and in particular multilayered containers, that include at least one barrier layer. For example, in the field of bottle packaging, a typical and common multilayered wall structure for a hollow rigid container is a three-layer wall: two internal and external layers made of PET, and one intermediate gas barrier layer sandwiched between the two PET layers.

A first known type of barrier layer is made of, or comprises, polymers that have excellent gas-barrier properties, in particular to $O_2$ and/or $CO_2$, and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) is preferably used, i.e. a poly(m-xylyleneadipamide) produced by the polycondensation of a diamine component composed mainly of m-xylylenediamine and a dicarboxylic acid component composed mainly of adipic acid.

US patent 4,501,781 assigned to Yoshino Kogyosho Co, Ltd discloses a multilayered container having for example a three layer structure: an internal layer and an external layer made of PET ; an intermediate passive barrier layer that is made of a blend PET and a xylylene group-containing polyamide (preferably MXD6). The ratio of the xylylene group-containing polyamide in the blend is in the range 5wt% to 50wt%, and preferably in the range 10wt% to 30wt%.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise and oxidizable polymer and a transition metal catalyst. In EP-A-0 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other know metal salts used for making such composition are rhodium, manganese, copper, iron.

With multilayered packaging articles having at least one gas barrier layer comprising a polyamide (e.g. MXD6) and a polyester (e.g. PET), very good results can be achieved in terms of shelf life of the packaged products. More especially when the barrier layer comprises a polyamide (e.g. MXD6), polyester (e.g. PET), and a catalyst such as a cobalt salt, the multilayered packaging article can be used for storing oxygen-sensitive products, such as beer, fruit juice, or the like. The shelf life of the packaged product widely depends of the amount of polyamide in the packaging article and of the thickness of the barrier layer.

US patent 5,281, 260 assigned to American National Can Company also teaches that the gas barrier property of polyester is enhanced by blending the polyester with xylylene group-containing polyamide and a transition metal catalyst. Preferred embodiments include blends of PET/MXD6/Cobalt. US patent 5,281, 260 further teaches that a high orientation of said blend would also improve the barrier properties. The explanation given is that the high orientation of the blend would increase the surface areas and interface between PET and MXD6 so that there are a greater number of sites at which a reaction or absorption of oxygen takes place.

In return, one major drawback of the use of a blend : polyamide/polyester, and in particular of blend : xylylene group-containing polyamide (such as MXD6)/ PET, for making a barrier layer in a packaging article, - especially in multilayered packaging article -, is the formation of haze in the barrier layer due to the orientation of the blend during the process for making the article.

Said problem of haze formation occurs and is very often eye-visible for layer polyamide/polyester having a "high" amount of polyamide, that is to say for polyamide amount of at least 3wt% in the layer, the worst case in terms of haze formation being a 50/50 blend in the layer.

In case of a gas barrier layer of a multilayered article, the polyamide having the barrier properties is located only in the barrier layer of the multilayered wall of the article, and the concentration of polyamide in the barrier layer is "high" (in comparison to a blend used for making a monolayer article) and is generally greater than 3wt% (typically at least 10wt%) in order to achieve the gas barrier properties, which in turns leads to problems of haze formation.

Said haze formation in the article wall is obviously detrimental for all the applications where it is important to have a transparent packaging article, - i.e. a packaging article whose wall has no eye-visible whitening or haze, in order to have a better appearance of the packaged product.

Said technical problem of haze formation of an oriented blend polyamide/polyester has been for example identified in US patent 6,239,210 assigned to Pechiney Emballage Flexible Europe. In particular, US patent 6,239,210 teaches that the loss of clarity is due to a change in the refractive index of the materials. The technical solution recommended in US patent 6,239, 210 in order to reduce haze is to limit the degree of orientation of the blend. More especially, in the field of making rigid multilayered containers, US patent 6,239,210 teaches to select the extrusion blow moulding process in order to achieve the required low degree of orientation, instead of the injection stretch blow moulding process that implies higher degrees of polymer orientation, and that leads to haze formation in the blend polyamide/PET.

### Objectives of the invention

A general and main objective of the invention is to propose a new polymeric composition for making a packaging article having a wall with both oxygen-scavenging properties and low haze.

A further objective of the invention is to propose a new polymeric composition for making a packaging article and having similar or higher gas barrier properties but exhibiting a lower haze when oriented, than a blend polyamide/PET.

### Summary of the invention

These objectives are achieved by the composition of claim 1.

The term "x%PETI" used herein, and especially in the claims, means a copolymer resin of polyethylene terephthalate and polyethylene isophthalate, having an isophthalic purified acid (IPA) content of x mole %. An isophthalic purified acid content (IPA) of x mole % means that during the preparation process of the copolymer by polymerisation of a glycol or glycol ether (for example ethylene glycol) with both terephthalic acid and isophthalic acid, x mole percent of isophthalic acid reacted with ethylene glycol.

The term "y%PETG" used herein, and especially in the claims, means a copolymer resin of polyethylene terephthalate and 1,4 cyclohexane dimethanol (CHDM) having a CHDM content of y mole %. A 1,4 cyclohexane dimethanol (CHDM) content of y mole % means that during the preparation process of the copolymer by polymerisation of a glycol or glycol ether (for example ethylene glycol) with terephthalic acid, y mole percent of 1,4 cyclohexane dimethanol (CHDM) reacted with terephthalic acid.

In a preferred embodiment, x and y are at least equal to 20, and preferably at least equal to 30.

In a preferred embodiment, the amount of polyamide is at least 8wt%, and more preferably at least 10wt%.

Polyamides that are suitable for making the composition of the invention can be any homo- or copolymer of polyamide (aromatic or aliphatic polyamide). Particularly interesting polyamides are those containing groups of the formula -arylene-$CH_2$-NH-CO-, conveniently in -NH-$CH_2$-arylene-$CH_2$-NH-CO-alkylene-CO- units. Especially suitable arylene groups are phenylene groups, particularly m-phenylene groups, which may be alkyl-substituted and/or condensed with other unsubstituted or alkyl-substituted aromatic rings. Alkylene and alkyl groups may conveniently have from 1 to 10 carbon atoms, and may be straight-chain or branched. Especially suitable alkylene groups are n-butylene groups. More particularly, among the polyamides that can be used for making the gas barrier of the preform or container of the invention, the so-called MXD6 is the most suitable owing to the high gas barrier properties of this polyamide.

Fully aliphatic polyamides can also be used, especially those comprising -$CO(CH_2)_n$$CONH(CH_2)_m$NH- or -$(CH_2)_p$CONH- units (n, m, and p being integers usually equal to 4, 5 or 6).

Preferably, the polyamides used for making the composition of the invention are high molecular weight polyamides, and in particular having a number average molecular weight greater than 10,000, and more especially greater than 15,000.

Within the scope of the invention, the composition is made from a blend comprising a polyamide and a x%PETI copolymer and y%PETG copolymer, wherein x and y are at least equal to 5.

More particularly, in one variant of the invention, the polyester used in the composition is essentially made of an x%PETI copolymer and/or y%PETG copolymer, wherein x and y are at least equal to 5. In another variant, the polyester can be a blend comprising a homo- or copolymer of PET and a x%PETI copolymer and y%PETG copolymer, wherein x and y are at least equal to 5.

The term "PET" used herein means, in addition to the specific polyester "polyethylene terephthalate", any similar polyesters derived from the reaction of terephthalic acid with a glycol or glycol ether, or from the reaction of a non-polymeric terephthalic acid diester, for example, dimethylterephthalate and similar diesters, with a glycol or glycol ether. Examples of such glycols and glycol ethers include cyclohexane dimethanol and diethers thereof, ethylene glycol and diethers thereof, diethylene glycol and diethers thereof, propylene glycol and diethers thereof, 1,3-propanediol and diethers thereof, butadeniols and diethers thereof, pentanediols and diethers thereof.

## Short description of the drawings

Other characteristics and advantages of the invention will appear more clearly on reading the following detailed description of several preferred embodiments of the invention, which description is made by way of non-exhaustive and non-limiting example, and with reference to the accompanying drawings, in which:

- Figure 1 is schematic drawing of a multilayer preform having a three-layer wall, and
- Figure 2 is a schematic drawing of a multilayered bottle obtained by stretch blow moulding the preform of figure 1
- Figure 3 shows the refractive index versus planar ratio for MXD6 and PET measured on cast films and stretched films.

## Detailed description of the invention

The following detailed description is focused on the use of several examples of a polymeric composition of the invention for making an injection stretch blow moulded container. In particular, all the following examples relate to a three-layer article (preform or bottle). Nevertheless, it must be underlined that the scope of protection is not limited to that particular application but encompasses the use of the composition for making any packaging article.

For example, one can use the composition of the invention for making a packaging article (flexible or rigid) by any other known technique, and for example by using the extrusion blow molding technique. One can also use the invention for making flexible films or sheets.

In particular, in the field of multilayered packaging articles, the invention is not limited to an article having a three-layer structure, but can be more generally applied for making any multilayered packaging article having at least one gas barrier layer.

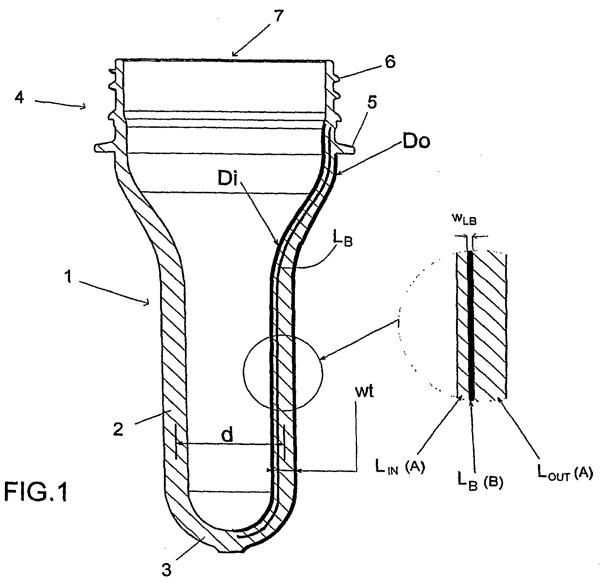

## MULTILAYERED PREFORM (Figure 1)

Figure 1 show a non-limiting example of a multilayered preform 1 having the well-known general following structure:

- a main tubular body 2 closed by a substantially hemispherical bottom end 3 ;
- a neck portion 4 including a collar 5, a thread 6, and an opened end-mouth 7.

As depicted in the enhanced view of figure 1, the tubular body 2 (and also the bottom end 3) is made of a three-layer wall: an outside layer $L_{OUT}$ and an internal layer $L_{IN}$ made from a first low-cost thermoplastic material A, and a thin intermediate layer $L_B$, that is sandwiched between the two layers $L_{OUT}$ and $L_{IN}$, and that is made from a second thermoplastic material B having gas barrier properties.

The neck portion 4 of the preform is of the mono-layer type and is for example made from the first thermoplastic material A. Said preform 1 is made in a standard way by co-injection (simultaneous and/or sequential injection) of the two thermoplastic materials A and B in an appropriate mould.

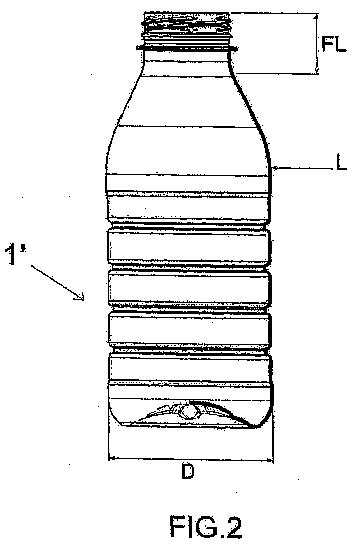

## MULTILAYERED STRETCH BLOW MOULDED BOTTLE (Figure 2)

The preform 1 is an intermediary product which in a further step is being transformed into a final hollow and rigid container (as for example the bottle 1' depicted in figure 2), by biaxially (radially and longitudinally) stretching in a mould the tubular body 2 and the bottom end 3 of the preform, by way for example of the well-known stretch-blow moulding technique. During this process, the neck portion 4 of the preform 1 is not stretched and remains unchanged.

The injection moulding step and the stretch-blow moulding step can be performed in two separate stages with a reheating of the preform, or can be performed in line as a one stage process.

**Examples N°1-15**

In each example N°1 to 15, three-layered preforms like the one depicted on figure 1 are made from two material A and B.

Material A

In all the examples, material A (outside and inside layers $L_{IN}$ and $L_{OUT}$ of the preform) is a blend of homopolymer of PET (Standard grade: less than 3wt % of Isophthalic purified acid) commercialized under reference 9921W by VORIDIAN and having an Intrinsic viscosity of 0.82 +/- 0.02.

Material B

In all the examples, material B (gas barrier layer $L_B$) is a dry blend made from 80wt% of a component B1, 19.62wt% of MXD6 and 0.38wt% of Cobalt Stearate
Component B1 is different for each example and is specified in table 1.

Table 1 : Material B

| Example N°# | MATERIAL B - BLEND | | | |
|---|---|---|---|---|
| | Component B1 | | MXD6[1] | Cobalt[2] |
| 1 | 40%PETI[3] - 80wt% | | 19.62wt% | 0.38wt% |
| 2 | 8%PETI[4] - 80wt% | | 19.62wt% | 0.38wt% |
| 3 | 8%PETI[4] 70wt% | 32%PETG[5] 10wt% | 19.62wt% | 0.38wt% |
| 4 | 8%PETI[4] 60wt% | 32%PETG[5] 20wt% | 19.62wt% | 0.38wt% |
| 5 | 80/0PETI[4] 50wt% | 32%PETG[5] 30wt% | 19.62wt% | 0.38wt% |
| 6 | 8%PETI[4] 40wt% | 32%PETG[5] 40wt% | 19.62wt% | 0.38wt% |
| 7 | 8%PETI[4] 30wt% | 32%PETG[5] 50wt% | 19.62wt% | 0.38wt% |
| 8 | 8%PETI[4] 20wt% | 32%PETG[5] 60wt% | 19.62wt% | 0.38wt% |
| 9 | 6%PETG[6] - 80wt% | | 19,62wt% | 0.38wt% |
| 10 | 6%PETG[6] 70wt% | 32%PETG[5] 10wt% | 19.62wt% | 0.38wt% |
| 11 | 6%PETG[6] 60wt% | 32%PETG[5] 20wt% | 19.62wt% | 0.38wt% |
| 12 | 60/0PETG[6] 50wt% | 32%PETG[5] 30wt% | 19.62wt% | 0.38wt% |
| 13 | 6%PETG[6] 50wt% | 32%PETG[5] 40wt% | 19.62wt% | 0.38wt% |
| 14 | 60/0PETG[6] 30wt% | 320/0PETG[5] 50wt% | 19.62wt% | 0.38wt% |
| 15 | 60/0PETG[6] 20wt% | 32%PETG[5] 60wt% | 19.62wt% | 0.38wt% |

(1) MXD6 grade 6007 (from MITSUBISHI GAS CHEMICAL)/ Pellets
(2) Cobalt Stearate commercialized under reference STEACO 9.5 by SHEPHERD CHEMICAL COMPANY / Powder
(3) MITSUI B Resin B-050 commercialized by MITSUI CHEMICALS and having an intrinsic viscosity of 0.85 / pellets
(4) resin commercialised by DUPONT SABANCI POLYESTER EUROPE under reference OPTRA H, and having an intrinsic viscosity 0.84 / pellets
(5) resin commercialized by SK CHEMICALS under reference Skygreen S 2008 and having an intrinsic viscosity of 0.8 /pellets
(6) resin commercialized by VORIDIAN under reference PJ003 and having an intrinsic viscosity of 0.83 / pellets

Preparation of the material A and B

At first, PET pellets (material A) are dried at 160°C during four hours. MXD6 pellets are separately dried at 80°C during four hours and pellets of component B1 are dried at moderate temperature (around 40°C above Tg)

A dried blend (material B) is prepared by mechanically blending in a tumbler dried pellets of component B1 (80wt%) and MXD6 (19.62wt%), and by adding cobalt stearate (0.38wt%) in powder form, in order to coat the pellets with the cobalt stearate. The blend is kept at 85°C under dry air before co-injection.

Injection step

The said blend (material B) is co-injected in a standard way in a mould with material A, in order to make a three-layer preform 1.

The co-injection step for making the preform is the same for each examples N°1 to 15.

The co-injection step is performed on a Battenfeld 1000 co-injection machine. The co-injection machine is equipped with :

- a main screw (for injecting material A) with a diameter of 35mm and a L/D ratio of 25/1,
- a second screw (for injecting the gas barrier material B) with a diameter of 25mm and L/D ratio of 25/1.

The Battendfeld machine has 3 heating bands that form three heating zones. Water is used as coolant with an inlet temperature < 10°C and an outlet temperature < 15°C.

The weight and dimensions of the preforms are the same for all the examples and are summarized in table 2.

Table 2 : Example of weight and dimensions:

| Weight (g) | 26 |
|---|---|
| wt(mm) | 3.92 |
| $W_{LB}$ (mm) | 0.43 |
| d (mm) | 18.14 |
| l (mm) | 75.36 |

Referring to figure 1, the dimensions of the preform mentioned in table 2 are defined as follows:

- wt is the preform multilayered wall thickness ;
- $w_{LB}$ is the average thickness of the gas barrier layer in the preform ;
- d is the mean diameter of the preform
- l is the developed length of the preform and is determined by formula :

$$l = \frac{Di + Do}{2}$$

wherein Di is the length of internal line ( bold outlined on figure 1),
and Do is the length of external line ( bold outlined on figure 1). Blow molding step

The preforms are biaxially stretched and blow-moulded in a standard way (blow molding step). The blow moulding step is the same for each example.

In particular, the preforms are biaxially stretched and blow-moulded on Sidel stretch blow moulding machine (SB O/2®), so as to obtain the three-layer bottle 1' of figure 1 having a fill volume of 0.5l. On figure 2, the straight line referred "FL" defines the upper limit of the fill volume of the bottle.

The bottle dimensions are the same for each example. As a non-limiting example, the main dimensions of the bottles are summarized in table 3.

Table 3 : Bottle dimensions

|  | Bottle |
|---|---|
| D (mm) | 70mm |
| L (mm) | 208,5 |

(continued)

|  | Bottle |
|---|---|
| WT(mm) | **0.39** |
| $W_{LB}$(mm) | **0.04** |
| $SR_H$ | **3.86** |
| $SR_L$ | **2.77** |
| SR | **10.69** |

In table 3 :

- dimension (D) is the maximum overall diameter of the bottle ;
- Dimension (L) is the developed length of the bottle surface from the underside of the neck ring and up to the bottle bottom end (bold outlined).
- Dimension (WT) is the average wall thickness of the bottle;
- Dimension ($W_{LB}$) is the average thickness of the gas barrier layer ($L_B$) in the bottle;
- $SR_H$ is the hoop stretch ratio and is defined by:

$$SR_H = \frac{D}{d}$$

- $SR_L$ is the longitudinal stretch ratio and is defined by:

$$SR_L = \frac{L}{l}$$

- SR is the planar stretch ratio and is defined by: $SR = SR_L \times SR_H$

## COMPARATIVE BOTTLE TESTING

Several tests were performed on the bottles of examples N°1 to N°15 in order to measure the following parameters: haze, scavenging performances, mechanical performances (top load).

By way of comparison the same test were performed on test bottles according to examples 16 and 17 below.

Example N°16 (prior art):

Injection-stretch blow moulded monolayer PET bottle having the same dimensions (except that the bottle is of the monolayer type) and weight than the bottles of examples N°1 to 15. The PET resin is the same than the one used for material A in examples N°1 to 15. The test bottles of examples N°16 exhibits very good clarity but very poor scavenging properties.

Example N°17 :

Three-layered bottles having the same weight and dimensions than the bottles of examples N°1 to 15. The bottles are obtained in an standard way by co-injecting the same material A (PET resin used in examples N° 1 to 15) in order to make the outside and inside layers $L_{IN}$ and $L_{OUT}$ of the preform with material B' (internal gas barrier layer).

Material B' is a dry blend of:

- 80wt% of homopolymer of PET (Standard grade: less than 3wt % of Isophthalic purified acid) commercialized under reference 9921W by VORIDIAN and having an Intrinsic viscosity of 0.82 +/- 0.02 [pellets];
- 19.62 wt% of MXD6 grade 6007 (from MITSUBISHI GAS CHEMICAL) [pellets] and,

- 0.38wt% of cobalt stearate commercialized under reference STEACO 9.5 from SHEPHERD CHEMICAL COMPANY [powder].

The test bottles of example N°17 are exhibiting high scavenging properties but in return are exhibiting eye-visible haze and do not achieve the objective of the invention in terms of haze level.

## Test methods

### Haze measurement

The haze is measured with a spectrophotometer (Minolta® CM -37000d) in the straight wall portion of the bottle, and by using the standard method ASTMD1003

### Scavenging test

The objective of the $O_2$ scavenging test is to check if the active layer in the wall of the container is effectively preventing the ingress of $O_2$.

Bottles are filled brimfull with deaerated water - less than 150 ppb of $O_2$ - and are closed with an induction sealed aluminium foil. Then they are stored at constant temperature of 22 °c +/- 0.5 °C. The $O_2$ dissolved in water is measured every 2 weeks using the orbisphere method. The general principle of the orbisphere system is based on the law of equilibrium between the gas present in the liquid and the gas phase. The equipment used is an oxygen sensor serie 311 XX with a membrane model 2958 A . The orbisphere microprocessor for 02 measurement is the 2640 model.

Bottles are first shaken during 3 minutes then the liner is pierced by the needle of the orbisphere piercer; the water to analyse is pushed by an inert gas - nitrogen- towards the sensor oxygen containing the membrane. $O_2$ concentration is then automatically calculated and displayed on the screen.

Bi-monthly measurements allow to follow the evolution of 02 dissolved inside the different containers produced.

### Top load Test

The objective of the test is to determine the vertical load that a bottle can withstand before deformation.

The test apparatus is a TOPLOAD tester INSTRON 1011.

The empty bottle under test is centered and positioned upright in the tester.

The load plate is moved downward with a speed of 50mm/min into contact with the bottle finish and the pressure is progressively increased until the bottle starts to be deformed. At the first deformation of the bottle (= peak 1) the load plate returns to its initial position. The top load value is obtained by reading the load value (kg) on the TOPLOAD tester.

## Test Results

### Top load

All the bottles of examples N°1 to 17 are exhibiting very good and comparable mechanical properties, the top load in each case being between 31 Kg and 34 Kg.

### Scavenging

All the bottles of examples N°1 to N°15 are exhibiting high scavenging properties that are comparable to the scavenging properties of bottles of example 17. In particular, after six months, the bottles of examples N°1 to 15 were still scavenging $O_2$, i.e. the residual quantity of oxygen dissolved in the water stored during 6 months in these bottles was lower than the starting level of $O_2$ dissolved just after filling (less than 120 ppb). In comparison, the bottles of example N° 16 do not exhibit scavenging properties. After two months only, the dissolved oxygen in water was 5.7 ppm.

### Haze level

The results of the tests for haze level are summarized in table 4 below.

**Table 4 : Experimental results - Haze level**

| Ex. N°# | Gas barrier material (B) | wt% | Haze % |
|---|---|---|---|
| 1 | 40%PETI/MXD6+Co | 80/20 | 2.47 |
| 2 | 8%PETI/MXD6+Co | 80/20 | 5.32 |
| 3 | 8%PETI / 32%PETG/MXD6+Co | 70/10/20 | 3.74 |
| 4 | 8%PETI / 32%PETG/MXD6+Co | 60/20/20 | 3.56 |
| 5 | 8%PETI / 32%PETG/MXD6+Co | 50/30/20 | 2.35 |
| 6 | 8%PETI / 32%PETG/MXD6+Co | 40/40/20 | 2.39 |
| 7 | 8%PETI / 32%PETG/MXD6+Co | 30/50/20 | 1.51 |
| 8 | 8%PETI / 32%PETG/MXD6+Co | 20/60/20 | 1.81 |
| 9 | 6%PETG/ MXD6+Co | 80/20 | 5.9 |
| 10 | 6%PETG /32%PETG/MXD6+Co | 70/10/20 | 4.62 |
| 11 | 6%PETG /32%PETG/MXD6+Co | 60/20/20 | 4.37 |
| 12 | 6%PETG /32%PETG/MXD6+Co | 50/30/20 | 2.93 |
| 13 | 6%PETG /32%PETG/MXD6+Co | 40/40/20 | 2.66 |
| 14 | 6%PETG /32%PETG/MXD6+Co | 30/50/20 | 1.96 |
| 15 | 6%PETG /32%PETG/MXD6+Co | 20/60/20 | 1.84 |
| 16 | *PET(Monolayer) - comparative example* | *100* | *2.2* |
| 17 | *PET/MXD6 +Co - comparative example* | *80/20* | *7.12* |

The examples N°1 to N°17 in table 4 corresponds to examples N°1 to 17 in table 1. In table 4 the weight percentage of MXD6 is added to the weight percentage of Cobalt Stearate (Co). For instance, example 1 in table 4 has to be read as follows : the blend is made of 40%PETI at 80wt%, and a mixture MXD6 and Cobalt stearate at 20wt% [which corresponds to example 1 in table 1 wherein the specific amounts of MXD6 and Cobalt stearate are detailed (namely 19.62 wt% of MXD6 + 0.38wt% of Cobalt Stearate = 20wt%)]. For instance, example 3 in table 4 has to be read as follows: the blend is made of 8%PETI at 70wt%, 32%PETG at 10wt% and a mixture MXD6 and Cobalt stearate at 20wt% [which corresponds to example 3 in table 1 wherein the specific amounts of MXD6 and Cobalt stearate are detailed (namely 19.62 wt% of MXD6 + 0.38wt% of Cobalt Stearate = 20wt%)].

The above results in table 4 demonstrate that the haze level is improved in examples N°1 to 15, compared to the haze level for bottles of example N°17. In addition, the haze level decreases when the mole percentage (x) of isophthalic acid for PETI copolyester or the mole percentage (y) of CHDM for the PETG copolyester is increased, and/or when the amount (in wt%) of y%PETG in the barrier layer is increased.

In particular, referring to examples N°5, N°6, N°7, N°8, N°12,N°13, N°14, N°15, very low haze level are achieved (comparable to a PET monolayer bottle of example N°16 and even with lower haze level in case of examples N°7, N°8, N°14 and N°15).

In addition, the bottles of example N°1 to N°15 exhibit higher adhesion properties for the layers (compared to bottles of example N°17) and in particular it is very difficult to delaminate by hand the layers of the bottles.

More particularly, better results - in particular in terms of haze level - are obtained when the composition of the invention has the following characteristics:

- the polyester in the barrier layer comprises a x%PETI copolymer and a y%PETG copolymer, with x and y being at least equal to 5 ; more preferably, in that case, x is at least equal to 5, and preferably at least equal to 8% and y is at least equal to 20 and preferably at least equal to 30 ; preferably, the amount of y%PETG in the barrier layer is greater than the amount of x%PETI ;
  and/or
- the gas-barrier layer ($L_B$) comprises 0 to 80wt% of x%PETI and 0 to 80wt% of y%PETG, the amount of x%PETI and y%PETG being at least equal to 80wt%;
  and/or
- the amount of x%PETI copolymer and/or y%PETG copolymer in the barrier layer ($L_B$) is at least 10wt%, preferably at least 50wt%, and more preferably at least 80wt%;
and/or
- x or y is at least equal to 20, and preferably at least equal to 30.

The composition of the invention is especially (but not only) suitable for making injection stretch blow moulded bottle having high stretch ratios, i.e. having a longitudinal stretch ratio ($SR_L$) greater than 2.5, and/or a hoop stretch ratio ($SR_H$) greater than 3, and/or a planar stretch ratio (SR) greater than 10. Nevertheless, in the field of bottle making, the composition can also be used for making rigid hollow container by using the extrusion blow moulding technique

The haze improvement obtained when practising the invention can be "a posteriori" explained as follows.

Haze in the bottle of example N°17 would be generated mainly during the biaxial stretching of the preform, due to the difference between the refractive index of oriented PET and the refractive index of oriented MXD6.

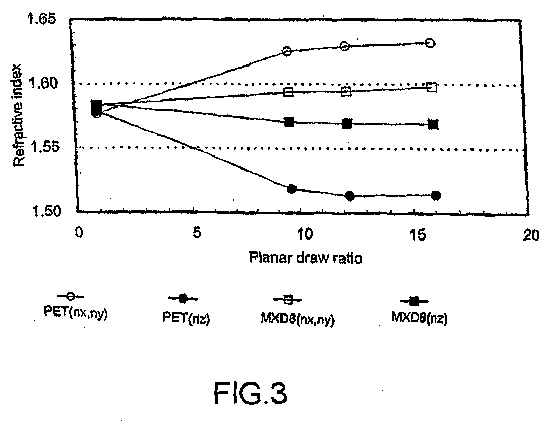

Figure 3 shows the refractive index versus planar ratio for cast films and stretched films made of MXD6 and for cast films and stretched films made of PET. It can be derived from figure 3 that the refractive index of non-oriented PET is substantially equal to the refractive index of the non-oriented MXD6, but that the refractive index of PET is increasing quickly when PET is being stretched, while the refractive index of MXD6 remains substantially constant. It can thus be derived from these graphs of figure 3 that in the preform, the refractive indices of MXD6 and PET are substantially the same, but once the preform is being stretched the refractive index of PET becomes far more important than the refractive index of MXD6 in the middle gas barrier layer of the bottle. Said important difference between the refractive indices of the two materials in the barrier layer would explain the formation of haze in the bottle, when the preform is being stretched.

In examples N°3 to N°, the use of a x%PETI and y%PETG copolyester (x,y >5) in the barrier layer provides mainly the following advantage. The x%PETI and y%PETG copolyester in the middle barrier layer of the preform has substantially the same refractive index (IR1) than the refractive index of MXD6, and because the x%PETI and y%PETG copolymer exhibits a lower crystallization speed, the crystallinity of said copolymer in the middle layer of the bottle (after stretching) is still low, and said refractive index (IR1) is not essentially modified when the preform is being stretched; in the end in the bottle, the refractive index (IR2) of the oriented MXD6 and the refractive index (IR1) of the x%PETI copolymer or y%PETG are "substantially the same". The wall of the bottle is thus transparent and exhibits low haze.

Within the scope of the invention the terms "substantially equal" for the two refractive indices (IR1) and (IR2) means that the difference between (IR1) and (IR2) is sufficiently small for avoiding the formation of eye-visible haze in the bottle during stretching. The range for this difference depends notably on the thickness of the layer; the thicker the barrier layer is, the smaller the difference has to be, in order to avoid the eye-visible haze formation. As an example, for a barrier layer having a thickness of $40\mu m$, it is preferable that the difference between refractive indices (IR1) and (IR2) is less than 0.04, and preferably less than 0.02, in order to avoid haze formation.

The gas barrier layer in examples N°1 to 15 is an active barrier that exhibits high oxygen-scavenging properties. For obtaining such an active barrier, in the gas barrier material (B), one skilled in the art may knowingly substitute cobalt stearate by other transition metal catalyst in a sufficient amount in order that MXD6 scavenges oxygen, and in particular metal salt such as cobalt octoate, rhodium compound, copper compound, or iron compound.

Within the scope of the invention, the outside and inside layers ($L_{OUT}$ and $L_{IN}$) are not necessarily made of PET and could be made of any thermoplastic material that give the required mechanical properties to the articles, although the use of homo or copolymer PET is preferred for cost reasons.

**Claims**

1. Composition having oxygen-scavenging properties and comprising a polyamide, a polyester, and transition metal catalyst, wherein the amount of polyamide is at least 3wt%, and the polyester comprises a x%PETI copolymer and a y%PETG copolymer, with x and y being at least equal to 5.

2. Composition according to claim 1 wherein the amount of polyamide is at least 8wt%, and more preferably at least 10wt%.

3. Composition according to claim 1 or 2 wherein x is at least equal to 5, and preferably at least equal to 8 and y is at least equal to 20 and preferably at least equal to 30.

4. Composition according to any one of claims 1 to 3 wherein the amount of y%PETG is greater than the amount of x%PETI.

5. Composition according to any one of claims 1 to 4, wherein the polyamide is a xylylene group containing polyamide.

6. Composition according to claim 5 wherein the polyamide is MXD6.

7. Composition according to any one of claims 1 to 6 wherein the amount of x%PETI copolymer and y%PETG copolymer is at least 10wt%, preferably at least 50wt%, and more preferably at least 80wt%.

8. Composition according to any one of claims 1 to 7 wherein x or y is at least equal to 20, and preferably at least equal to 30.

9. Composition according to any one of claims 1 to 8 wherein the transition metal catalyst is selected from the group: cobalt compound, rhodium compound, copper compound, iron compound.

10. Composition according to claim 9 wherein the transition metal catalyst is a cobalt salt.

11. Composition according to claim 10 wherein the cobalt salt is cobalt stearate.

12. Composition according to any one of claims 1 to 11 wherein the composition is a blend.

13. Method of making a composition according to claim 12 wherein polyamide pellets and polyester pellets are separately dried, and then a dry blend is prepared by mixing the said dried polyamide pellets, the said dried polyester pellets and the transition metal catalyst.

14. Packaging article made from the composition any one claims 1 to 12.

15. Multilayered packaging article according to claim 14 and comprising at one internal gas-barrier layer, wherein said gas-barrier layer ($L_B$) is made from the composition of any one of claims 1 to 12.

16. Packaging article according to claim 15 and comprising at least three layers: the said gas-barrier layer ($L_B$) sandwiched between two non-barrier layers ($L_{in}$, $L_{out}$).

17. Packaging article according to claim 16 wherein the two non-barrier layers ($L_{in}$, $L_{out}$) are made from homo- or copolymer of PET.

18. Packaging article according to any one of claims 14 to 17 and having a haze level less than 5%, preferably less then 3% and more preferably less than 2%.

19. Use of the composition of any one of claims 1 to 12 for making an internal barrier layer in multilayered packaging article.

**Patentansprüche**

1. **Zusammensetzung** mit sauerstoffzehrenden (scavenger) Eigenschaften und mit einem Polyamid, einem Polyester und einem Übergangsmetallkatalysator, wobei der Anteil an Polyamid zumindest 3 Gew.-% beträgt und der Polyester ein x%PETI Copolymer und ein y%PETG Copolymer umfasst, wobei x und y zumindest gleich 5 ist/sind.

2. Zusammensetzung nach Anspruch 1, wobei der Anteil an Polyamid zumindest 8 Gew.-% und bevorzugt zumindest 10 Gew.-% beträgt.

3. Zusammensetzung nach Anspruch 1 oder 2, wobei x zumindest gleich 5 ist und bevorzugt zumindest gleich 8 ist, und y zumindest gleich 20 ist und bevorzugt zumindest gleich 30 ist.

4. Zusammensetzung nach einem der Ansprüche 1 bis 3, wobei der Anteil an y%PETG größer ist als der Anteil an x%PETI.

5. Zusammensetzung nach einem der Ansprüche 1 bis 4, wobei das Polyamid ein eine Xylylengruppe enthaltendes Polyamid ist.

6. Zusammensetzung nach Anspruch 5, wobei das Polyamid MXD6 ist.

**7.** Zusammensetzung nach einem der Ansprüche 1 bis 6, wobei der Anteil an x%PETI Copolymer und y%PETG Copolymer zumindest 10 Gew.-% beträgt, bevorzugt zumindest 50 Gew.-%, und besonders bevorzugt zumindest 80 Gew.-%.

**8.** Zusammensetzung nach einem der Ansprüche 1 bis 7, wobei x oder y zumindest gleich 20 ist/sind, und bevorzugt gleich 30 ist/sind.

**9.** Zusammensetzung nach einem der Ansprüche 1 bis 8, wobei der Übergangsmetallkatalysator ausgewählt ist aus der Gruppe bestehend aus: Cobaltverbindung, Rhodiumverbindung, Kupferverbindung, Eisenverbindung.

**10.** Zusammensetzung nach Anspruch 9, wobei der Übergangsmetallkatalysator ein Kobaltsalz ist.

**11.** Zusammensetzung nach Anspruch 10, wobei das Kobaltsalz Kobaltstearat ist.

**12.** Zusammensetzung nach einem der Ansprüche 1 bis 11, wobei die Zusammensetzung eine Mischung (Blend) ist.

**13.** Verfahren zur Herstellung einer Zusammensetzung nach Anspruch 12, wobei Polyamid-Pellets und Polyester-Pellets separat getrocknet werden und dann eine Trockenmischung (Dry-Blend) durch Vermischen der getrockneten Polyamid-Pellets, der getrockneten Polyester-Pellets und des Übergangsmetallkatalysators hergestellt wird.

**14.** Verpackungsartikel, hergestellt aus der Zusammensetzung nach einem der Ansprüche 1 bis 12.

**15.** Mehrlagiger (multilayer) Verpackungsartikel nach Anspruch 14 und mit zumindest einer internen Gasbarriereschicht, wobei die Gasbarriereschicht ($L_B$) aus der Zusammensetzung nach einem der Ansprüche 1 bis 12 hergestellt wurde.

**16.** Verpackungsartikel nach Anspruch 15 und mit zumindest drei Schichten: die Gasbarriereschicht ($L_B$), angeordnet zwischen zwei Nicht-Barriereschichten ($L_{in}$, $L_{out}$).

**17.** Verpackungsartikel nach Anspruch 16, wobei die zwei Nicht-Barriereschichten ($L_{in}$, $L_{out}$) aus einem PET-Homopolymer oder PET-Copolymer bestehen.

**18.** Verpackungsartikel nach einem der Ansprüche 14 bis 17 und mit einem Trübungsgrad kleiner als 5%, bevorzugt kleiner als 3% und besonders bevorzugt kleiner als 2%.

**19. Verwendung** der Zusammensetzung nach einem der Ansprüche 1 bis 12 zum Herstellen einer internen Barriereschicht in einem mehrlagigen Verpackungsartikel.


**Revendications**

**1.** Composition ayant des propriétés désoxygénantes et comprenant un polyamide, un polyester et un catalyseur à métaux de transition, dans laquelle la quantité de polyamide est d'au moins 3 % en poids, et le polyester comprend un copolymère de x % de PETI et un copolymère de y % % de PETG, avec x et y étant au moins égaux à 5.

**2.** Composition selon la revendication 1 dans laquelle la quantité de polyamide est d'au moins 8 % en poids, et plus préférablement d'au moins 10 % en poids.

**3.** Composition selon la revendication 1 ou 2 dans laquelle x est au moins égal à 5 et de préférence au moins égal à 8 et y est au moins égal à 20 et de préférence au moins égal à 30.

**4.** Composition selon l'une quelconque des revendications 1 à 3 dans laquelle la quantité de copolymère de y % % de PETG est supérieure à la quantité de copolymère de x % de PETI.

**5.** Composition selon l'une quelconque des revendications 1 à 4, dans laquelle le polyamide est un polyamide contenant un groupe xylylène.

**6.** Composition selon la revendication 5 dans laquelle le polyamide est un MXD6.

7. Composition selon l'une quelconque des revendications 1 à 6 dans laquelle la quantité de copolymère de x % de PETI et de copolymère de y % de PETG est d'au moins 10 % en poids, de préférence d'au moins 50 % en poids, et plus préférablement d'au moins 80 % en poids.

8. Composition selon l'une quelconque des revendications 1 à 7 dans laquelle x ou y est au moins égal à 20, et de préférence au moins égal à 30.

9. Composition selon l'une quelconque des revendications 1 à 8 dans laquelle le catalyseur à métaux de transition est choisi dans le groupe suivant : composé à base de cobalt, composé à base de rhodium, composé à base de cuivre, composé à base de fer.

10. Composition selon la revendication 9 dans laquelle le catalyseur à métaux de transition est un sel de cobalt.

11. Composition selon la revendication 10 dans laquelle le sel de cobalt est un stéarate de cobalt.

12. Composition selon l'une quelconque des revendications 1 à 11 dans laquelle la composition est un mélange.

13. Procédé de production d'une composition selon la revendication 12 dans lequel des granulés de polyamide et des granulés de polyester sont séchés séparément, puis un mélange sec est préparé en mélangeant lesdits granulés de polyamide séchés, lesdits granulés de polyester séchés et le catalyseur à métaux de transition.

14. Article d'emballage fabriqué à partir de la composition selon l'une quelconque des revendications 1 à 12.

15. Article d'emballage multicouche selon la revendication 14 et comprenant au moins une couche interne faisant barrière aux gaz, dans lequel ladite couche faisant barrière aux gaz ($L_B$) est fabriquée à partir de la composition selon l'une quelconque des revendications 1 à 12.

16. Article d'emballage selon la revendication 15 et comprenant au moins trois couches : ladite couche faisant barrière aux gaz ($L_B$) intercalée entre deux couches ne faisant pas barrière ($L_{in}$, $L_{out}$).

17. Article d'emballage selon la revendication 16 dans laquelle les deux couches ne faisant pas barrière ($L_{in}$, $L_{out}$) sont fabriquées à partir d'un homo- ou copolymère de PET.

18. Article d'emballage selon l'une quelconque des revendications 14 à 17 et ayant un niveau de trouble inférieur à 5 %, de préférence inférieur à 3 % et plus préférablement inférieur à 2 %.

19. Utilisation de la composition selon l'une quelconque des revendications 1 à 12 pour la production d'une couche interne faisant barrière dans un article d'emballage multicouche.

FIG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4501781 A
- EP 0301719 A
- EP 0507207 A
- US 5281260 A
- US 6239210 B